# EUROPEAN PATENT APPLICATION

(11) **EP 1 403 624 A1**
(43) Date of publication of application: **31.03.2004**
(21) Application number: 03007800.0
(22) Date of filing: 04.04.2003
(51) Int. Cl.: G01D 5/347

(54) **Techniques for reducing encoder sensitivity to optical defects**

(30) Priority: 26.09.2002 US 256178
(71) Applicant: Hewlett-Packard Development Company, L.P., Houston, Texas 77070 (US)
(72) Inventor: Soar, Steven E., WA 98682 (US)
(74) Representative: Schoppe, Fritz, Dipl.-Ing.

(57) **Abstract**

Techniques for improving the robustness of an optical encoder (50) are described. The encoder has an array (58) of photosensitive elements, which respond to light reflected from or transmitted through a pattern of lines (62) formed on a code wheel or strip (60). The photosensitive elements comprising the array are arranged in dispersed, non-contiguous detector areas (22A - 22D).

## Description

### BACKGROUND OF THE DISCLOSURE

Optical encoders are commonly used in control applications, to monitor position or speed of a movable element. These encoders typically employ a code wheel or code strip, on which is formed a pattern of opaque strips of a known spacing and width. A light source projects a light beam on the code wheel or strip, which rotates or moves with the movable element. A light sensor is responsive to the reflected or transmitted light beam, which is interrupted by the strips and forms an alternating pattern of light and dark corresponding to the pattern of the strips. The output of the sensor is processed to determine how many strips have passed in an interval and thus keep track of the position and speed of the movable element.

Exemplary applications for optical encoders are in printers such as inkjet printers, to monitor the position and speed of printhead carriages and print media handling elements.

Problems arise in the operation of the optical encoders due to point defects on the code wheel or strip, or on the photosensitive area of the light sensor. Such point defects could result from imaging defects occurring during manufacture, or resulting from use of the system subsequent to manufacture. For example, optical encoders used in inkjet printing systems can develop point defects from spots of the aerosol ink that builds up inside the printing system as it is used and ages.

### SUMMARY OF THE DISCLOSURE

Techniques for improving the robustness of an optical encoder are described. The encoder has an array of photosensitive elements, which respond to light reflected from or transmitted through a pattern of lines formed on a code wheel or strip. The photosensitive elements comprising the array are arranged in dispersed, non-contiguous detector areas.

### BRIEF DESCRIPTION OF THE DRAWING

These and other features and advantages of the present invention will become more apparent from the following detailed description of an exemplary embodiment thereof, as illustrated in the accompanying drawings, in which:

FIG. 1 is a simplified schematic block diagram of an exemplary optical encoder.

FIG. 2A is a diagrammatic illustration of the typical layout of the encoder module die or substrate of an optical encoder.

FIG. 2B illustrates a point defect on the encoder code wheel, code strip or the encoder module die.

FIG. 3 is a diagrammatic illustration of an embodiment of an encoder die layout in accordance with an aspect of the invention, which is employed in the encoder of FIG. 1.

FIG. 4 is a block diagram of an exemplary embodiment of a motion control system embodying an encoder photodetector layout in accordance with the invention.

FIG. 5A is a simplified view showing the pattern of opaque lines or strips which are formed on the encoder wheel comprising the system of FIG. 4.

FIG. 5B is a schematic illustration of the layout of the IC die comprising the encoder module of the system of FIG. 4.

### DETAILED DESCRIPTION OF THE DISCLOSURE

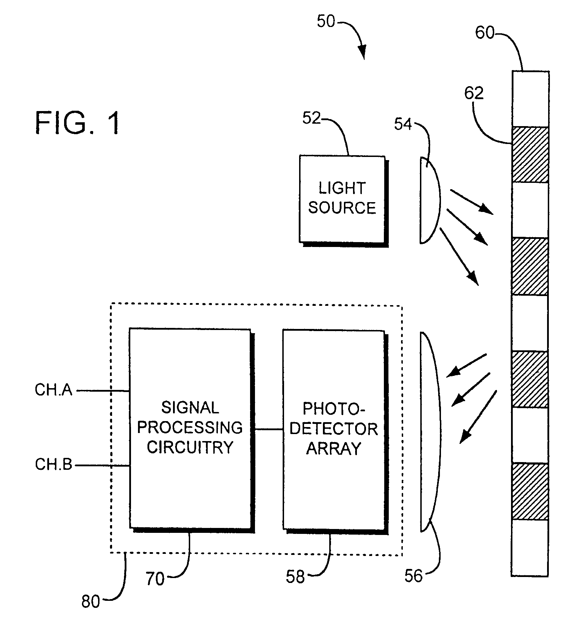

FIG. 1 is a simplified schematic block diagram of an exemplary optical encoder 50. The encoder includes a light source 52, e.g. an LED, whose output light is imaged through a lens 54 onto a code wheel or code strip 60 with a pattern of opaque strips 62 formed therein. The image of the code wheel or code strip 60 is reflected through a lens 56 onto an array 56 of photodetectors, e.g. photodiodes. Signal processing circuitry is responsive to the outputs of the photodetectors to generate the encoder output. Typically the photodetector array 58 and the signal conditioning/processing circuitry are integrated onto a photodetector integrated circuit (IC)represented diagrammatically by dashed box 80. The IC includes a substrate or die on which is formed the circuitry 70 and the array 56. While FIG. 1 depicts a reflective optical encoder, embodiments of this invention can be fabricated in reflective or transmissive optical encoders.

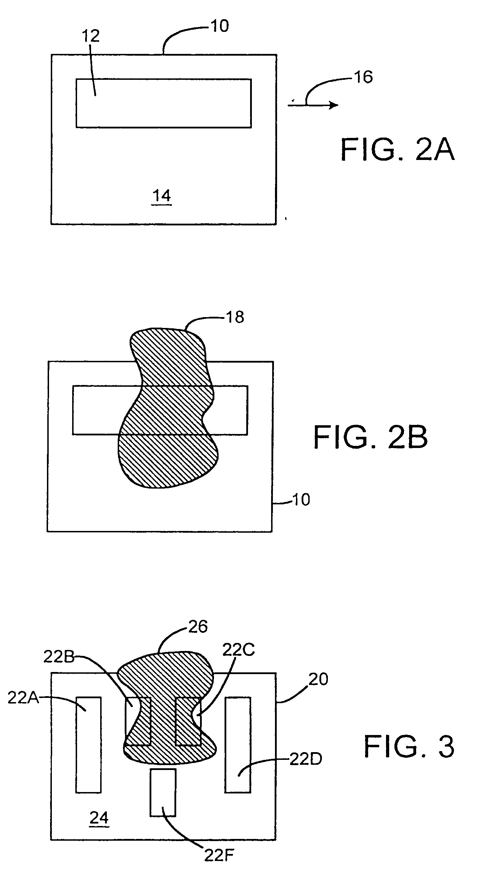

FIG. 2A diagrammatically depicts the typical layout of the encoder IC die or substrate 10 of an optical encoder. An array of photodetectors, e.g. photodiodes, phototransistors or other photosensors, occupies detector area 12 on the die. Generally, the area 12 has a longitudinal extent aligned with the axis of movement, depicted by arrow 16, of the encoder code strip or code wheel comprising the optical encoder. The remaining die area 14 is occupied by signal conditioning circuitry comprising the module. Such a die layout is susceptible to substantial occlusion of the detector area 12 by a point defect.

FIG. 2B illustrates a point defect 18, which could exist anywhere in the optical path of the encoder, caused by error in manufacturing or contamination, i.e. dust, ink droplets, etc. As evident in FIG. 2B, the point defect will occlude a significant portion of the detector area 14, and thus reduce the signal level output from the photodetector array. This can lead to encoder errors.

FIG. 3 is a diagrammatic illustration of an embodiment of an encoder die layout in accordance with an aspect of the invention. Instead of having a photodetector array formed in a single contiguous area as in FIG. 2A, the diodes comprising the array are dispersed into a plurality of non-contiguous photosensitive detector areas 22A-22F. It can be seen that a point defect 26 of a similar size to the defect 16 (FIG. 2A) will occlude a reduced detector area in relation to the occluded area for the layout illustrated in FIG. 2A. The signal conditioning circuits for the encoder module can be layed out in areas 24 outside the detector areas 22A-22F.

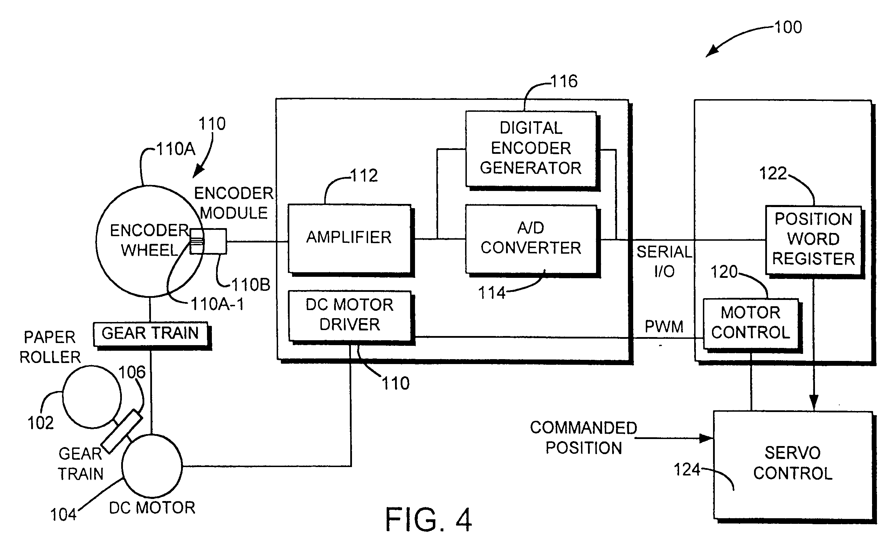

Encoders employing photodetector array layouts in accordance with aspects of this invention can be used in many different applications. An exemplary application is the motion control system 100 shown in FIG. 4. The system 100 in this example controls a print media advance roller 102 in an inkjet printer. A DC motor 104 drives the roller through a gear train 106. Motion commands are issued to the motor by a motor driver 110. Feedback of the true position of the roller 102 is transmitted through an encoder disc 110A to the encoder module 110B of encoder 110. The encoder disc or wheel has formed thereon a pattern 110A1 of elongated opaque strips, in the conventional fashion. The encoder module 110B includes a module die (not shown in FIG. 4) which has formed thereon an array of photodetectors in spaced sub-groups.

Quadrature encoder states are typically provided by additional detector pairs (usually equivalent in number) located 90 optical degrees from the other set of pairs. That is, if the encoder wheel line spacing is 100 units, the sets of detector pairs will be offset 25 units from each other. Encoders used today typically have between six and thirteen pairs of photodetectors per quadrature state.

In this exemplary embodiment of a motion control system, the photodetector array signals from module 110 are amplified and conditioned by an amplifier 112, and passed to A/D (analog-to-digital) converter 114, and to the digital converter generator 116 which generates the quadrature states, forming a digital output. The digital signal generator 116 typically includes a pair of comparators that compares the two analog signals (i.e. the quadrature photodetector states) in some way. This creates a two channel digital signal in quadrature. The digital outputs of the digital encoder generator 116 and the A/D converter 114 are combined, and transmitted over a serial I/O bus to a position word register 122, which pieces together, i.e. associates, digitized analog position data from converter 114 with a corresponding digital count from the digital encoder generator to form position data words. This data is fed back to the servo control 124.

The servo control 124 receives commanded position data from the system controller, e.g. a printer controller, and generates motor control commands. From commands received from the servo control 124, the motor control 120 generates pulse width modulation (PWM) control signals which are transmitted to the motor driver 110. Coarse positioning is effected by the servo control through the digital positioning path, which comprises the encoder to amplifier to digital encoder generator. The servo control 124 includes a counter, which counts the number of line detection transitions from the digital positioning path, and uses the phase of the quadrature signals as control of whether to count up or down. For example, say the motor is stopping and reversing; the counter will continue to count up as the motion comes to a stop; as motion begins to reverse, the phase relationship of the two quadrature signals reverses, and now input counts cause the counter to count down, i.e. subtract rather than add. Higher accuracy for the final stopping position is interpolated by the servo control between digital quadrature states using the analog signals measured by the A/D converter 114. Thus, the accuracy of the final stopping position is greater than the resolution defined by the encoder line spacing, in this exemplary embodiment.

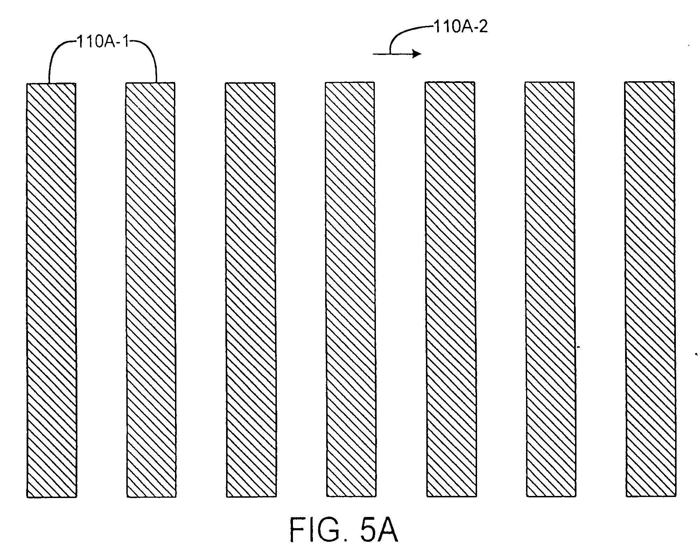

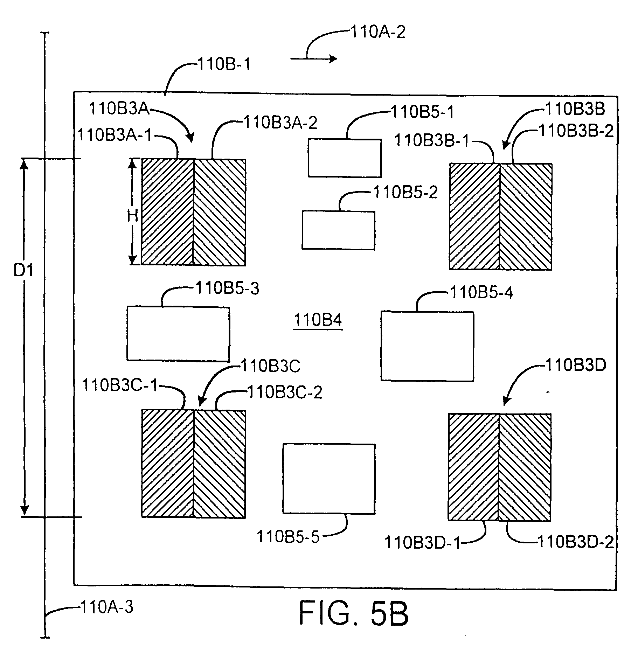

FIGS. 5A-5B illustrate the encoder in further detail. FIG. 5A is a simplified view showing the pattern of opaque lines or strips 110A-1 which are formed on the encoder wheel 110A. For this exemplary embodiment, the strips are radially extending strips of some predetermined width and pitch spacing, although for simplicity in FIG. 5A the strips are shown as parallel strips, as they would be for a linear code strip embodiment. The wheel 110A rotates so as to pass the strip pattern by the encoder module in a direction indicated by arrow 110A-2, an axis of motion, which is a tangent to the wheel. FIG. 5B is a schematic illustration of the layout of the IC die110B1comprising the encoder module 110B. As depicted therein, the photosensitive detector areas 110B3A-110B3D are dispersed over the die surface, with signal conditioning/processing circuitry 110B5-1 to 110B5-5 disposed among the dispersed photosensitive areas on the die.

The array of photodetectors formed in the detector areas 110B3A-110B3D are imaged at the same spacing as the lines 110A-1 on the wheel. Each detector area is divided into two sub-areas, 110B3A-1 and 110B3A-2, 110B3B-1 and 110B3B-2, 110B3C-1 and 110B3C-2, and 110B3D-1 and 110B3D-2. The photodetectors in sub-area110B3A-1 are separated from the photodetectors in sub-area 110B3B-1 by a spacing equal to the line spacing. Similarly, the photodetectors in sub-area110B3A-2 are separated from the photodetectors in sub-area 110B3B-2 by a spacing equal to the line spacing. The photodetectors in sub-area110B3C-1 are separated from the photodetectors in sub-area 110B3D-1 by a spacing equal to the line spacing. The photodetectors in sub-area110B3C-2 are separated from the photodetectors in sub-area 110B3D-2 by a spacing equal to the line spacing. The signal processing circuitry sums the signals from all the photodetectors in sub-areas 110B3A-1, 110B3B-1, 110B3C-1 and 110B3D-1. The signals from all the photodetectors in sub-areas 110B3A-2, 110B3B-2, 110B3C-2 and 110B3D-2 are summed together. All photodetectors summed are spaced so that they are simultaneously either illuminated or occluded. (It is also common to space the photodetectors in pairs so that as one half is illuminated, the other half is occluded, and in signal conditioning, the difference between the two signals is measured. This technique aids in desensitizing the output signal from variation in total illumination. This invention is applicable whether the subtraction method is used or not.)

Increased encoder sensitivity robustness against point optical defects on the disc or encoder module are provided by the layout of the photodetector areas on the die. Line 110A-3 (FIG. 5B) depicts a portion of the longitudinal extent of the lines 110A-1 which pass the module die 110B-1 during operation. The dispersed detector areas subtend a length D of this lateral extent of the lines, which is substantially increased over the line length subtended by a conventional photodetector array layout, typically the same distance as H, the height of the detector area. This significantly improves the robustness of the encoder operation against optical defects on the encoder wheel or on the encoder module. This increased robustness against optical defects is particularly useful in application using analog interpolation to provide increased position resolution, but can also provide increased margin against optical defects in applications employing only digital encoder position data.

The layout of FIG. 5B is merely an illustration of one embodiment of a dispersed photodetector array layout. Other layouts can employ increased numbers of detector areas. The detector areas could be located in corners of the die, for example, or dispersed in a general "x" pattern. The photodetectors could be dispersed along the axis of motion as well. Such an arrangement would have sensitivity to defects which are elongated along the axis of motion, however. A dispersed placement of detectors gives greatest immunity to randomly located and shaped defects.

It is understood that the above-described embodiments are merely illustrative of the possible specific embodiments which may represent principles of the present invention. Other arrangements may readily be devised in accordance with these principles by those skilled in the art without departing from the scope and spirit of the invention.

## Claims

1. An optical encoder (50), comprising:
a code wheel or strip (60), having a pattern of lines (62) formed thereon;
an encoder integrated circuit substrate (80) on which is formed an array (56) of photodetectors responsive to light transmitted through or reflected from the code wheel or strip;
wherein the photodetectors comprising said array are arranged in randomly dispersed, non-contiguous detector areas (22A-22D) on said substrate.

2. An encoder according to Claim 1, wherein the encoder integrated circuit substrate further includes signal processing circuitry (70) connected to the array of photodetectors, and wherein said signal processing circuitry is defined in areas between said dispersed detector areas.

3. An encoder according to Claim 1 or Claim 2, further comprising a light source (52) for directing light onto the code wheel or strip.

4. An encoder according to any preceding claim, wherein the detector areas have respective width dimensions in a transverse direction which is transverse to an axis of motion of the encoder wheel or strip, and wherein said detector areas are dispersed relative to said transverse direction so as to subtend a distance along said transverse direction which is greater than any one of the respective width dimensions.

5. An encoder according to any preceding claim, wherein the array of photodetectors comprises an array of photodiodes.

6. An encoder according to any of preceding claims 1-4, wherein the array of photodetectors comprises an array of phototransistors.

7. A motion control system, comprising an optical encoder according to any preceding claim.

8. An optical encoder (50), comprising:
a transparent or translucent code wheel or strip (60), having a pattern of elongated dark strips (62) formed thereon;
a light source (52) for directing light onto the code wheel or strip;
an array of photodetectors (58) responsive to light transmitted through or reflected from the code wheel or strip;
the code wheel or strip movable with respect to the array of photodetectors along a radial or linear axis of motion; and
wherein the photodetectors comprising said array are arranged in offset groups (22A-22D) relative to the radial or linear axis of motion so as to reduce encoder sensitivity effects of occlusion from a defect in an optical path between the light source and the array of photodetectors.
